# EUROPÄISCHE PATENTSCHRIFT

(11) **EP 0 222 116 B1**
(45) Veröffentlichungstag und Bekanntmachung des Hinweises auf die Patenterteilung: **26.05.1993**
(21) Anmeldenummer: 86113056.5
(22) Anmeldetag: 23.09.1986
(51) Int. Cl.: H02G 3/18, H01R 25/16

(54) **Einbaudose für elektrische Installationsgeräte**
Flush-mounted box for electrical installations
Boîte d'encastrement pour installations électriques

(30) Priorität: 15.10.1985 DE 3536623; 08.04.1986 DE 3611828
(43) Veröffentlichungstag der Anmeldung: 20.05.1987
(73) Patentinhaber: Hermann Kleinhuis GmbH. & Co. KG, D-58507 Lüdenscheid (DE)
(72) Erfinder: Henniger, Dieter, D-5885 Schalksmühle 1 (DE); König, Walter, D-5883 Kierspe 1 (DE)
(74) Vertreter: Buse, Karl Georg, Dipl.-Phys.

(56) Entgegenhaltungen:
- DE-A- 3 113 679
- DE-U- 7 728 373

## Beschreibung

Die Erfindung betrifft eine Einbaudose für elektrische Installationsgeräte zur verspannten Festlegung an einer Haltevorsprünge aufweisenden Montagewand, die vorzugsweise Bestandteil von Kabelkanälen ist, mit mit den Haltevorsprüngen zusammenwirkenden Haken, wobei die Einbaudose einen Befestigungsteil umfaßt, der durch von außen betätigbare Verstellmittel verstellbar ist, wobei der Befestigungsteil die Haken aufweist, die Haltevorsprünge der Montagewand hintergreifen, und wobei in einer Sperrlage durch einem Oberteil zugeordnete Sperrmittel die Haken in Bezug auf die Haltevorsprünge sicherbar sind.

Bei einer aus dem DE-GM 77 28 373 bekannten Einbaudose ist in deren Boden ein Drehriegel drehbar gelagert, der eine einen Haltevorsprung unterfassende Haltezunge aufweist, wobei der Haltevorsprung der Montagewandung von der Haltezunge einerseits und von bodenseitigen Anschlägen der Einbaudose anderseits in Sperrlage umfaßt ist. Diese Ausführungsform hat an sich den Vorteil, daß die Befestigung der Einbaudose an der Montagewandung eines Kabelkanals völlig unabhängig von einem Spannmoment erfolgt, so daß es durch die Befestigung der Einbaudose am Kabelkanal nicht zu irgendwelchen Verformungen kommen kann. Außerdem ist es von Vorteil, daß die Festlegung der Einbaudose an nur einem Haltevorsprung der Montagewandung erfolgen kann. Die drehbare Anordnung des Drehriegels im Boden der Einbaudose läßt einerseits eine unverlierbare Zuordnung beider Teile zu, so daß der Transport und die Lagerhaltung solcher vormontierter Einbaudosen begünstigt wird. Andererseits hat diese vorbekannte Einbaudose den Nachteil, daß die Befestigungskräfte des Drehriegels nur horizontal wirken und damit Toleranzprobleme bei der Einbauhöhe auftreten. Außerdem ist festgestellt, daß bei Benutzung des Drehriegels in der Praxis häufig ein Verkanten der Einbaudose auftritt.

Aus der DE-A-31 13 679 ist eine gattungsgemäße Einbaudose bekannt, die abgesehen von ihrer Oberseite im wesentlichen geschlossen ist, da der Dosenboden einstückig mit der Umfassungswandung verbunden ist. An zwei gegenüberliegenden Seiten der Umfassungswandung sind Führungsnuten parallel zur Dosenlängsachse für in den Dosenboden und zwei Seitenwandungen einführbare Klammerkörper, die einen Befestigungsteil bilden, vorgesehen, womit die an sich einstückige Einbaudose an Schienen einer Montagewandung festgelegt werden kann. Der Haken aufweisende, durch von außen betätigbare Verstellmittel verstellbare Befestigungsteil hintergreift Hakenvorsprünge von Schienen einer Montagewand im Befestigungsfall. Bei dieser Lösung erfolgt keine unmittelbare Abstützung der Einbau-dose an der Montagewand, da die Klammerkörper an den Schienen bzw. deren Hakenvorsprüngen verrasten. Höhentoleranzen der Schienen selbst lassen sich nicht ausgleichen, so daß der Abstand der Dosenoberseite nur Bezug zur Schiene nicht aber zur Montagewand hat.

Der Erfindung liegt die Aufgabe zugrunde, Einbaudosen für elektrische Installationsgeräte der eingangs genannten Art zu verbessern, wobei insbesondere die angeführten Nachteile der bekannten Ausführungsformen mit einfachen und wohlfeilen Mitteln beseitigt werden sollen.

Diese Aufgabe ist erfindungsgemäß dadurch gelöst, daß der Oberteil der Einbaudose bodenseitig von einem das Befestigungsteil bildenen Unterteil geschlossen ist, derart, daß Oberteil und Unterteil aus einer Ruhelage in die Sperrlage relativ zueinander stellbar sind.

Im Gegensatz zu den bekannten Einbaudosen ist das Gehäuse derselben nunmehr quergeteilt. Es besteht aus einem Unter-und einem Oberteil, die unterschiedliche Lagen zueinander einnehmen können. Die eine Endlage ist dabei die Ruhelage und die andere Endlage ist Sperrlage. Damit Ober-und Unterteil des Gehäuses der erfindungsgemäßen Einbaudose in die eine oder andere gewünschte Lage überführt werden können, werden Verstellmittel benutzt, die einen an sich bekannten Aufbau haben können. Es lassen sich die in der Technik dafür bekannten Verstelleinrichtungen benutzen. Erwähnt seien Exzenter, Keile, Keilflächen oder auch Schrauben. Dabei ist lediglich darauf zu achten, daß die benutzte Verstelleinrichtung von außen her bedient werden kann. Beim Anbringen der bekannten Einbaudose nehmen Ober-und Unterteil zunächst ihre gegenseitige Ruhelage ein. Sie können in der Ruhelage bis zum Anschlag an die Montagewand geführt werden.

In dieser Stellung liegen die Haken des Unterteils noch vor den Haltevorsprüngen. Durch eine Querverschiebung der Einbaudose gelangen dann die Haken unter die Haltevorsprünge der Montagewand. Ist diese Lage erreicht, dann werden die Verstelleinrichtungen bedient. Dadurch erfolgt ein Zusammenführen von Ober- und Unterteil, bis schließlich die einander zugekehrten Stirnflächen von Ober- und Unterteil aneinanderstoßen. Dabei erfolgt zugleich ein Verspannen der Einbaudose an den Haltevorsprüngen der Montagewand. Beim Überführen der Teile der Einbaudose gelangen Sperrmittel in ihre wirksame Lage, in welcher sie ein ungewolltes Zurückführen der Teile in ihre Ruhelage verhindern.

Außerdem hat diese Ausführungsform der Einbaudose den Vorteil, daß die Einbaudose in vertikaler Richtung exakt auf dem Kanalboden befestigt wird. Die Toleranzprobleme sind dadurch wesentlich geringer. Außerdem wird die Einbaudose völlig parallel zum Kanalboden arretiert.

Nach einem weiteren Vorschlag der Erfindung besitzt der Unterteil der Einbaudose einen an seiner Außenseite die Haken aufweisenden Boden und senkrecht dazu angeordnete, an den Innenwandungen des Oberteils geführte Seitenwände. Dabei hat der Unterteil im Querschnitt gesehen im wesentlichen U-förmige Gestalt. In der Ruhelage ist zwischen dem Unterteil und dem Oberteil ein Spalt vorhanden, der das Maß des gegenseitigen Verschiebens bestimmt.

Bei der bevorzugten Ausführungsform der Erfindung sind die Sperrmittel durch Bereiche der Wandungen des Oberteils der Einbaudose gebildet. Die Sperrmittel sind dabei derart gestaltet, daß sie automatisch beim Zusammenführen von Ober- und Unterteil der Einbaudose in ihre Sperrlage gelangen.

Dabei empfiehlt es sich, die Breitenabmessungen des Sperrmittels im wesentlichen dem gegenseitigen Abstand zweier Haltevorsprünge der Montagewand und die Höhe des Sperrmittels etwa derjenigen eines Haltevorsprunges entsprechen zu lassen. Diese bevorzugte Ausführungsform der Erfindung hat wesentliche Vorteile. Zum einen kann auf zusätzliche Sperrmittel verzichtet werden. Vielmehr werden Bereiche des Oberteils der Einbaudose so ausgebildet, daß sie zugleich eine weitere Funktion erfüllen, nämlich als Sperrmittel eingesetzt werden zu können. Durch die erwähnten Abmessungen kommen in der Endlage die als Sperrmittel dienenden Wandungen des Oberteils in direkten Kontakt mit der Montagewandung. Damit können sich die Stirnflächen dieser als Sperrmittel dienenden Wandungen des Oberteils an der zugekehrten Oberfläche der Montagewandung abstützen. Ein seitliches Verschieben der Einbaudose ist ebenfalls nicht möglich, weil die Sperrmittel genau in den Raum zwischen zwei Haltevorsprüngen der Montagewand passen. Damit ist auch ein ungewolltes seitliches Herausschieben der Haken der Einbaudose aus den Haltevorsprüngen nicht möglich.

Sofern als Verstellmittel Schrauben benutzt werden, weist die Aufnahmebohrung für die Schraube mehrere wahlweise benutzbare Aufnahmeräume für den Schraubenschaft auf. Eine solche Ausführungsform hat gegenüber dem Bekannten beachtliche Vorteile. Dabei wird von der Überlegung ausgegangen, daß die Gerätebefestigungsschrauben für die beiden in der Praxis vorkommenden Befestigungsspuren von 60 mm bzw. 67 mm benutzt werden sollen. Bisher war ein Umstecken der Befestigungsschrauben erforderlich, wenn von der einen Befestigungsspur auf die andere übergegangen werden soll. Eine solche Handhabung, also ein Umstecken, ist bei der erfindungsgemäßen Ausbildung nicht mehr erforderlich. Vielmehr hat es der Benutzer in der Hand, die Schraube aus dem einen Aufnahmeraum in den anderen zu überführen, ohne daß dabei die Befestigungsschraube die Aufnahmebohrung verlassen muß.

Dabei ist bei der bevorzugten Ausführungsform der Erfindung vorgesehen, die beiden Aufnahmeräume der Aufnahmebohrung durch Rasten voneinander zu trennen. Diese Rasten verhindern mit einfachsten Mitteln ein ungewolltes Überführen der Befestigungsschraube aus dem einen Aufnahmeraum in den anderen. Vielmehr muß der Benutzer eine gewisse kraft aufbringen, um die Schraube aus dem einen Aufnahmeraum in den anderen zu überführen.

Dabei ist es zweckmäßig, die Aufnahmebohrung einen unrunden, vorzugsweise ovalen Querschnitt aufweisen zu lassen, wobei sich der Querschnitt in Richtung auf den Unterteil verjüngt und schließlich in einen kreisförmigen Querschnitt übergeht, der etwa an der Übergangsstelle zwischen Ober- und Unterteil liegt.

Nach einem weiteren Vorschlag der Erfindung weisen die als Sperrmittel dienenden Wandungen des Oberteils der Einbaudose Rastelemente auf. Durch solche Rastelemente wird die Arretierung quer zur Kanalrichtung aufrecht erhalten. Diese Rastelemente verhindern ein ungewolltes Herausfallen der Einbaudose. Vielmehr kann die Dose aus dem Kanal nur durch Anwendung einer bestimmten Kraft herausgezogen werden.

Bei der vorbeschriebenen ersten Ausführungsform der Einbaudose ist es erforderlich, Ober- und Unterteil des quergeteilten Gehäuses durch verstellmittel miteinander zu verbinden. Dies geschieht dabei dadurch, daß man die Befestigungsschrauben in die ihnen zugeordneten Aufnahmebohrungen einsetzt und dann mit den zugeordneten Muttern verschraubt. Erst nach dem Verbinden der Feststellschrauben mit den zugeordneten Muttern sind Ober- und Unterteil miteinander verbunden und können nicht mehr auseinanderfallen. Eine solche Handhabung ist relativ umständlich und zeitraubend.

Eine weitere Aufgabe der Erfindung ist es, die Verbindung zwischen dem Ober- und Unterteil der Einbaudose zu vereinfachen.

Gelöst wird diese Aufgabe dadurch, daß der Oberteil und der Unterteil der Einbaudose zusätzlich über Rasten und Gegenrasten miteinander verbunden sind, die eine räumlich begrenzte Verschiebung zwischen Oberteil und Unterteil zulassen. Es ist daher nicht mehr - wie bei der ersten Ausführungsform der Erfindung - erforderlich, die Befestigungsschrauben mit den zugehörigen Muttern zu vereinigen, um einen Zusammenhalt zwischen dem Unterteil und dem Oberteil des Gehäuses der Einbaudose zu erzielen. Vielmehr genügt es, die Rasten und Gegenrasten, die einerseits am Oberteil und andererseits am Unterteil vorhanden sind, einfach in ihre wirksame Lage zu überführen. Dies geschieht ohne Zuhilfenahme irgendwelcher Werkzeuge. Dabei ist es von weiterem Vorteil, daß die Befestigungsschrauben und die Muttern zwar in die zugehörigen Aufnahmen von Ober- bzw. Unterteil eingesetzt werden, aber noch nicht miteinander unmittelbar in Wirkverbindung treten müssen. Dies geschieht erst dann, wenn die Einbaudose an Ort und Stelle bestimmungsgemäß gebraucht werden soll.

Bei der bevorzugten Ausführungsform der Erfindung ist die Rast als nasenartiger Vorsprung des Unterteiles und die Gegenrast als nutenartige Vertiefung der Innenwand des Oberteiles ausgebildet. Die Breiten- und Tiefenabmessungen von dem nasenartigen Vorsprung und der zugeordneten nutenartigen Vertiefung sind dabei aufeinander abgestimmt. Die oberen und unteren Begrenzungswandungen der nutenartigen Vertiefung dienen dabei als Anschlag für die Rast beim gegenseitigen Verschieben von Ober- und Unterteil des Gehäuses. Die Länge der nutenartigen Vertiefung bestimmt die Verschiebelänge von Ober- und Unterteil zueinander.

Es empfiehlt sich, den nasenartigen Vorsprung oberhalb einer Mutterntasche für die mit der Befestigungsschraube zusammenwirkende Mutter an der einen Seitenwand des Unterteils anzuordnen.

In diese Mutterntasche wird die mit der Befestigungsschraube zusammenwirkende Mutter eingeschoben. Um dieses zu ermöglichen, ist die Mutterntasche nach einer Seite hin offen.

Es empfiehlt sich, die Mutterntasche in Richtung auf den Boden des Unterteils durch Stege zu begrenzen.

Dabei ist es zweckmäßig, diese Stege geneigt zur Senkrechten verlaufen zu lassen, wobei ihre freien Enden einen den Durchtritt des Schaftes der Befestigungsschraube zulassenden gegenseitigen Abstand voneinander haben.

Hinsichtlich der Festlegung der Mutter in der Mutterntasche ergeben sich mehrere Möglichkeiten. Bei der ersten Möglichkeit ist vorgesehen, die Mutter einfach in die zugeordnete Mutterntasche einzuschieben. Sie wird erst dann in ihrer Lage gesichert, wenn Oberteil und Unterteil in ihre ein geschlossenes Gehäuse bildende Endlage überführt werden.

Nach eineranderen Möglichkeit kann man jedoch auch einige der Seitenwandungen der Mutterntasche die Mutter durch Klemmung festlegende Vorsprünge aufweisen lassen. Bei diesen Vorsprüngen kann es sich um einfache warzenartige handeln, die bei der Herstellung der Mutterntasche mit erzeugt werden. In diesem Falle ist es erforderlich, die Mutter unter einer bestimmten Krafteinwirkung in die Mutterntasche einzuschieben. Sie wird dann jedoch durch die Klemmkraft in ihrer Lage gesichert, ohne daß es hierbei erforderlich ist, Ober- und Unterteil in ihre Endlage zu überführen.

Nach einem weiteren Vorschlag der Erfindung ist die Einbaudose mit mehreren hohlkegelförmigen Aufnahmebohrungen für Befestigungsschrauben versehen. In der Regel sind zwei solcher Aufnahmebohrungen vorhanden, die auf diametral gegenüberliegenden Seiten der Einbaudose liegen. Die untere Öffnung der Aufnahmebohrung für die Befestigungsschraube weist dabei erfindungsgemäß einen Durchmesser auf, der kleiner als der der Befestigungsschraube ist.

Dabei ist es vorteilhaft, die untere Öffnung der Aufnahmebohrung einen vorzugsweise umlaufenden, lippenartigen, mit dem Gewinde der Befestigungsschraube zusammenwirkenden Begrenzungsrand aufweisen zu lassen. Bei einer solchen Ausbildung der unteren Öffnung der hohlkegelförmigen Aufnahmebohrung kann man die Befestigungsschraube einfach mit dem unteren Teil ihres Schaftes durch die Öffnung hindurchstecken. Sie wird dann im Zusammenwirken mit den Begrenzungswandungen der Öffnung in ihrer Lage gehalten. Ein ungewolltes Herausfallen der Befestigungsschraube aus der Aufnahmebohrung ist nicht zu erwarten. Auf der anderen Seite ist es für Transport- oder Lagerzwecke nicht erforderlich, die Befestigungsschraube sofort mit der in der Mutterntasche angeordneten Mutter zusammenwirken zu lassen. Trotzdem sind Ober- und Unterteil ihres Gehäuses schon miteinander vereinigt und zwar über die erfindungsgemäßen Rasten und Gegenrasten.

Auf der Zeichnung ist die Erfindung in mehreren Ausführungsbeispielen dargestellt und zwar zeigen:
- Fig. 1: einen Schnitt durch eine erste Ausführungsform der erfindungsgemäßen Einbaudose, teilweise in Seitenansicht, in ihrer Sperrlage, d.h. nach dem Festlegen an den Haltevorsprüngen einer Montagewand, die strichpunktiert wiedergegeben und als Boden eines Kabelkanals ausgebildet ist.
- Fig. 2: einen Schnitt durch die erfindungsgemäße Einbaudose, bei der Ober- und Unterteil ihren weitesten Abstand voneinander haben (Ruhelage), Schnittverlauf gemäß der Linie II-II der Fig. 4 der Zeichnung.
- Fig. 3: einen Schnitt durch die erfindungsgemäße Einbaudose in ihrer Sperrlage entlang der Linie III-III gemäß der Fig. 4 der Zeichnung.
- Fig. 4: eine Draufsicht auf die erfindungsgemäße Einbaudose,
- Fig. 5: einen Schnitt durch eine zweite Ausführungsform der erfindungsgemäßen Einbaudose, wobei in der linken Hälfte dieser Fig. die Ruhelage dargestellt ist, bei der Ober- und Unterteil ihren weitesten Abstand voneinander haben, während in der rechten Hälfte dieser Fig. die Sperrlage dargestellt ist,
- Fig. 6: im vergrößerten Maßstab, teilweise im Schnitt und teilweise weggebrochen, zusätzliche Verbindungsmittel zwischen Oberteil und Unterteil der zweiten Ausführungsform der erfindungsgemäßen Einbaudose bei fehlender Befestigungsschraube und
- Fig. 7: in Seitenansicht und nochmals vergrößertem Maßstab einen Teilbereich des Unterteils der erfindungsgemäßen zweiten Ausführungsform der Einbaudose mit der in ihrer Mutterntasche befindlichen Mutter.

Es sei zunächst erwähnt, daß in den Figuren der Zeichnungen nur diejenigen Teile einer Einbaudose dargestellt sind, welche für das Verständnis der Erfindung Bedeutung haben. So sind beispielsweise sämtliche elektrischen Einrichtungen, Leitungen, Geräte od.dgl., die in einer Einbaudose Platz finden könnten, der Einfachheit halber fortgelassen. Die Verstelleinrichtungen zwischen Ober- und Unterteil der Einbaudose sind nur teilweise wiedergegeben. Sie können einen an sich bekannten Aufbau haben. Anstelle der in der Zeichnung wiedergegebenen Schrauben können auch andere in der Technik gebräuchliche Verstelleinrichtungen, wie Exzenter, Keile od.dgl. eingesetzt werden. Damit ist auch eine Betätigung bei eingesetzten Installationsgeräten möglich.

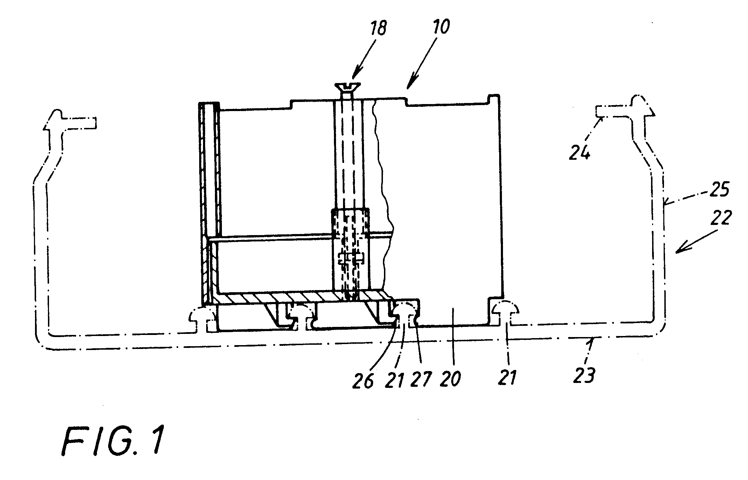

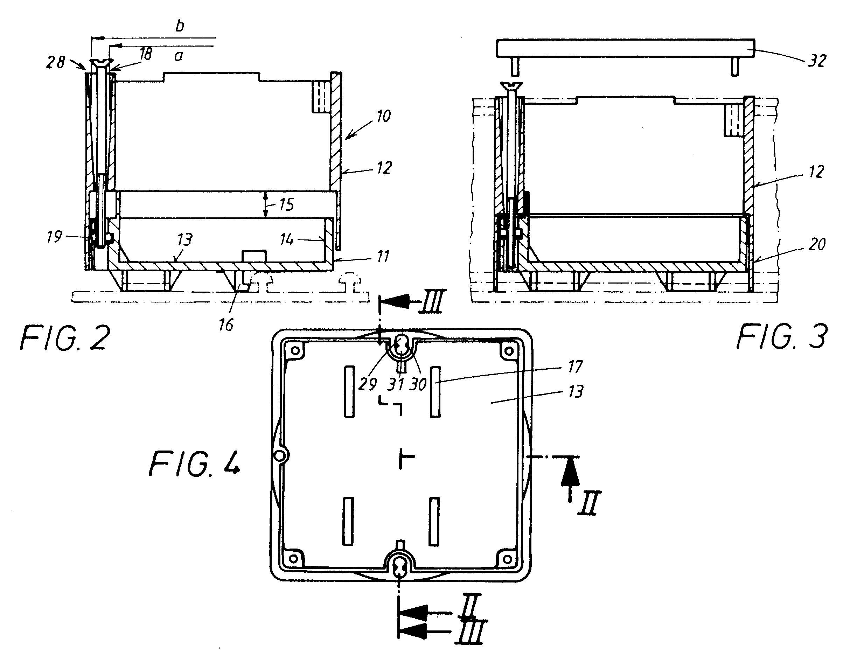

Dem ersten Ausführungsbeispiel gemäß den Fig. 1 bis 4 der Zeichnung ist eine generell mit 10 bezeichnete Einbaudose zugrundegelegt, die aus einem der in der Elektroindustrie gebräuchlichen Isolierstoffe hergestellt ist. Die Einbaudose 10 setzt sich zusammen aus einem Unterteil 11 und einem Oberteil 12. Im dargestellten Ausführungsbeispiel hat der Unterteil 11 im Querschnitt gesehen U-förmige Gestalt. Dabei sind die Seitenwandungen mit 14 und der senkrecht dazu angeordnete Boden mit 13 bezeichnet. An der Außenseite des Bodens 13 des Unterteiles 11 sind Haken 16 angeformt, die im Querschnitt gesehen L-förmig ausgestaltet sind. Im gewählten Ausführungsbeispiel hat der Boden 13 insgesamt vier solcher Haken 16, die alle untereinander gleichgestaltet sind. Die Lage der Haken 16 ergibt sich aus der Fig. 4. Dort sind in Draufsicht gesehen rechteckige Schlitze 17 in regelmäßiger Anordnung vorhanden. Unterhalb der Schlitze liegen die aus den Fig. 1 und 2 ersichtlichen Haken 16.

Der Oberteil 12 hat - vergl. dazu die Fig. 4 der Zeichnung - im Querschnitt gesehen quadratische Gestalt. Seine nicht näher bezeichneten Seitenwandungen sind wesentlich länger gehalten als diejenigen des Unterteiles 11. An den Seitenwandungen des Oberteiles 12 sind in bekannter Weise Dome od.dgl. angeordnet, die der Aufnahme von Verstelleinrichtungen, beispielsweise der Schraube 18 dienen, die mit einer Mutter 19 zusammenwirkt, die in einer nicht näher bezeichneten Aufnahme des Unterteils 11 angeordnet ist. An den Seitenwandungen des Oberteils 12 und/oder des Unterteils 11 können auch andere Verstelleinrichtungen angebracht werden. Da diese eine an sich bekannte Ausbildung haben, ist auf eine nähere Darstellung und Beschreibung verzichtet.

Die erfindungsgemäße Einbaudose 10 hat Sperrmittel 20, die die Sperrlage der Einbaudose 10 an einer Montagewandung sichern. Im dargestellten Ausführungsbeispiel sind die Sperrmittel 20 durch Bereiche der Wandungen des Oberteils 12 der Einbaudose 10 gebildet, wie dies am besten die Fig. 1 der Zeichnung erkennen läßt. Die Breitenabmessungen jedes Sperrmittels 20 sind dabei im wesentlichen dem gegenseitigen Abstand zweier Haltevorsprünge 21 einer Montagewand 23 angepaßt. Die Höhe des Sperrmittels 20 entspricht etwa derjenigen eines Haltevorsprunges 21. Im gewählten Ausführungsbeispiel sind insgesamt drei Sperrmittel vorhanden, die untereinander gleichgestaltet sind, so daß in der Fig. 1 der Zeichnung nur einer von ihnen wiedergegeben ist.

Wie schon erwähnt, ist in dem dargestellten Ausführungsbeispiel gemäß den Fig. 1-4 davon ausgegangen, daß als Verstellmittel Befestigungsschrauben 18 benutzt werden. Dabei sind Maßnahmen vorgesehen, um der Tatsache Rechnung zu tragen, daß es in der Praxis zwei Befestigungsspuren a bzw. b für derartige Schrauben gibt, und zwar sind dies die Befestigungsspuren 60 mm (a) bis 67 mm (b). Wie aus den Fig. 2 und 4 der Zeichnung insbesondere ersichtlich ist, sind bei der erfindungsgemäßen Einbaudose Mittel vorgesehen, die ein Umstecken der Befestigungsschraube überflüssig machen, wenn von der einen Befestigungsspur auf die andere übergegangen werden soll. In der Fig. 2 ist durch Pfeile dargestellt, welche beiden Lagen die Befestigungsschraube 18 einnehmen kann. Diese beiden Lagen werden dadurch erreicht, daß die Befestigungsschraube 18 in einer Aufnahmebohrung 28 der Einbaudose 10 angeordnet ist, die mehrere, vorzugsweise zwei, wahlweise benutzbare Aufnahmeräume 29 und 31 für den Schraubenschaft aufweist. Die Aufnahmebohrung 28 hat im dargestellten Ausführungsbeispiel einen ovalen Querschnitt, der sich in Richtung auf den Unterteil 11 verjüngt, wobei im Endbereich eine runde Querschnittsform vorliegt, die dem Durchmesser des Schraubenschaftes entspricht. Die Fig. 4 läßt erkennen, daß zwischen den beiden Aufnahmeräumen 29 und 31 Rasten 30 vorgesehen sind. Diese Rasten verhindern ein ungewolltes Verlagern der Befestigungsschraube 18 von dem einen Aufnahmeraum 29 in den anderen 31. Vielmehr muß eine Kraft vom Benutzer aufgebracht werden, um den Schraubenschaft über die Rast 30 zu bringen. Sobald der Benutzer die Befestigungsschrauben in die äußeren Aufnahmeräume 29 überführt hat, ist die Befestigungsspur 67 mm (b) vorhanden. Werden dagegen die beiden Befestigungsschrauben 18 in die Aufnahmeräume 31 überführt, dann ist die Befestigungsspur 60 mm (a) vorhanden. Diese Überführung geschieht durch einfaches Kippen der Befestigungsschrauben 18, so daß ein Umstecken entbehrlich ist.

Aus der Fig. 1 der Zeichnung ist ersichtlich, daß die als Sperrmittel 20 dienenden Wandungen des Oberteils 12 der Einbaudose 10 Rastelemente 27 aufweisen. Diese Rastelemente 27 sind den Wandungen unmittelbar angeformt. Die Rastelemente 27 sorgen dafür, daß die Einbaudose nicht ungewollt aus ihrer in Fig. 1 dargestellten Lage herausgleiten kann. Der Benutzer muß, wenn er die Einbaudose aus der in Fig. 1 dargestellten Lage herausführen will, eine gewisse Kraft aufwenden, um die Rastelemente 27 über den pilzkopfartigen oberen Bereich der Haltevorsprünge zu überführen.

In der in Fig. 1 dargestellten Sperrlage liegen die Stirnflächen der Sperrmittel 20 auf dem benachbarten Boden 23, also auf der Montagewandung. Zwischen den benachbarten Sperrmitteln 20 ist jeweils ein Raum freigelassen, der der Querschnittsgestaltung der Haltevorsprünge 21 angepaßt ist.

Gemäß dem Ausführungsbeispiel nach der Fig. 1 der Zeichnung ist die Einbaudose 10 in dem Unterteil eines Kabelkanals 22 untergebracht. Der Boden 23 dieses Kabelkanals 22 bildet im Ausführungsbeispiel zugleich die Montagewand. Im mittleren Bereich - und zwar nach innen liegend - hat der Boden 23 die im Querschnitt gesehen pilzförmigen Haltevorsprünge 21, die in bekannter Weise parallel zueinander verlaufen und sich über die gesamte Länge des Kabelkanals 22 erstrecken können. Im dargestellten Ausführungsbeispiel sind insgesamt vier solcher Haltevorsprünge 21 vorgesehen, die untereinander gleichgestaltet und in regelmäßiger Anordnung vorhanden sind. Der Kabelkanal 22, der im Querschnitt gesehen etwa U-förmig gestaltet ist, hat Seitenwandungen 25 mit nach innen zeigenden Vorsprüngen 24, die in bekannter Weise zur Anbringung von Querstreben herangezogen werden können. Der auf den Kabelkanal 22 aufzusetzende Deckel ist der Einfachheit halber fortgelassen. Er kann mit dem Unterteil des Kabelkanals 22 verrastet werden.

Unterteil 11 und Oberteil 12 der Einbaudose 10 können unterschiedliche Lagen zueinander einnehmen. In der Fig. 2 der Zeichnung ist die Ruhelage der beiden Teile wiedergegeben. In dieser ist zwischen dem Oberteil 12 und dem Unterteil 11 ein Spalt 15 vorhanden. Dieser Spalt 15 bestimmt zugleich das Maß des gegenseitigen Verschiebens von Oberteil 12 und Unterteil 11.

In der in Fig. 2 dargestellten Ruhelage ist schon berücksichtigt, daß die Einbaudose 10 bis zur Anlage an die Montagewand 23 eingesetzt ist. Die kürzeren Schenkel der im Querschnitt L-förmigen Haken 16 liegen somit bereits an der Oberfläche des Bodens 23 an. Um aus dieser Stellung heraus die Teile der Einbaudose 10 in ihre Sperrlage überführen zu können, ist es zunächst erforderlich, eine Querbewegung der Einbaudose 10 durchzuführen und zwar nach rechts, wenn man die Fig. 2 als Bezugsbasis nimmt. Bei dieser Querbewegung kommen Bereiche des Hakens 16 mit der Anlagefläche 26 der Haltevorsprünge 21 in Verbindung. Es erfolgt ein Hintergreifen. Diese Querbewegung erfolgt so lange, bis die vorderen Stirnflächen der Haken 16 an die aufrechte Wandung des Haltevorsprunges 21 anstoßen. Ist diese Lage erreicht, dann werden die Verstelleinrichtungen 18 benutzt, um die beiden Teile 11 und 12 der Einbaudose einander zu nähern, bis die in den Fig. 1 und 3 dargestellte Endlage erreicht ist. In dieser ist ein Verspannen der Einbaudose 10 mit den Haltevorsprüngen 21 der Montagewand 23 erfolgt. In dieser Lage befinden sich die Sperrmittel 20 in ihrer wirksamen Stellung. Dies bedeutet, daß ein seitliches Verschieben, also ein Verschieben der Einbaudose 10 in Richtung auf die linke Seitenwandung 25 des Kabelkanals 22 nicht mehr möglich ist.

Wie aus der Fig. 3 der Zeichnung ersichtlich, ist dem Oberteil 12 der Einbaudose 10 noch ein Rahmen 32 zugeordnet, der bei Bedarf benutzbar ist und der dem Höhenausgleich dient. Es handelt sich um einen einstückigen Rahmen, der in an sich bekannter Weise mit Verbindungselementen, beispielsweise mittels Stiften, mit dem Oberteil 12 der Einbaudose 10 verbunden werden kann.

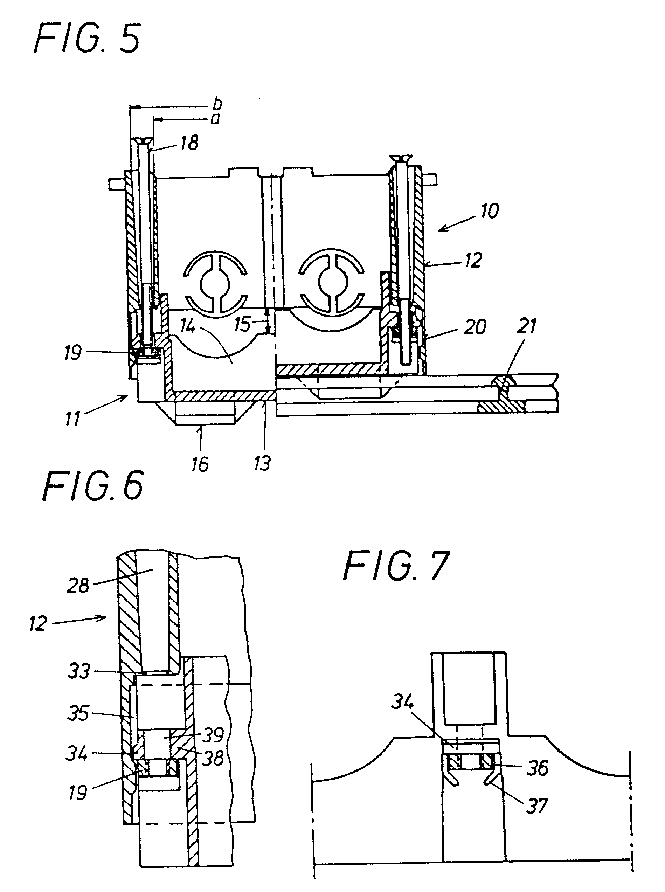

Bei der zweiten Ausführungsform der Erfindung nach den Fig. 5 und 6 der Zeichnung ist wiederum vorgesehen, daß als Verstellmittel Befestigungsschrauben Verwendung finden. Auch die Aufteilung der Aufnahmebohrung 28 in die wahlweise benutzbaren Aufnahmeräume 29 bzw. 31 ist beibehalten. Auch hat die Aufnahmebohrung 28 einen Endbereich mit einer im Querschnitt runden unteren Öffnung 33. Diese untere Öffnung 33 weist nunmehr einen Durchmesser auf, der kleiner ist als derjenige der Befestigungsschraube 18. Die untere Öffnung 33 der Aufnahmebohrung 28 hat einen vorzugsweise umlaufenden, lippenartigen, mit dem Gewinde der Befestigungsschraube 18 zusammenwirkenden Begrenzungsrand. Dabei ist es auch möglich, diesen Begrenzungsrand in einzelne Abschnitte zu unterteilen. In beiden Fällen genügt es, eine der Befestigungsschrauben 18 mit ihrem unteren Teil des Schaftes durch die Öffnung 33 hindurchzustecken. Die Befestigungsschraube wird dann im Zusammenwirken mit den Begrenzungswandungen der unteren Öffnung in ihrer Lage gehalten. Sie ist somit unverlierbar in der Aufnahmebohrung 28 angeordnet, ohne daß es dazu einer unmittelbaren Verbindung mit der Mutter 19 bedarf.

Aus der Fig. 6 der Zeichnung ist am besten zu erkennen, daß der Oberteil 12 und der Unterteil 11 der Einbaudose 10 zusätzlich über Rasten 34 und Gegenrasten 35 miteinander verbunden sind. Diese sind so gestaltet, daß sie eine räumlich begrenzte Verschiebung zwischen Oberteil 12 und Unterteil 11 zulassen. Im gewählten Ausführungsbeispiel gemäß der Fig. 6 der Zeichnung ist die Rast 34 als nasenartiger Vorsprung des Unterteils 11 und die Gegenrast 35 als nutenartige Vertiefung der Innenwand des Oberteiles 12 ausgebildet. Die Nase bzw. Rast 34 kann somit im Inneren der nutenartigen Vertiefung verschoben werden, wobei die Endbereiche der nutenartigen Vertiefung jeweils als Anschlag für die Rastnase 34 dienen. Die Rast 34 und die Gegenrast 35 sind bei der Herstellung von Ober- bzw. Unterteil unmittelbar mit erzeugt.

Wie aus den Fig. 6 und 7 der Zeichnung am besten ersichtlich ist, liegt die Mutter 19 in einer Mutterntasche 36. Diese Mutterntasche 36 liegt unterhalb einer Verdickung 38, die ihrerseits von einer Bohrung 39 durchsetzt wird. Durch die Bohrung 39 kann das untere Ende des Schraubenschaftes hindurchgreifen, um mit dem Gewinde der Mutter 19 zusammenwirken zu können.

Die Mutterntasche 36 ist in Richtung auf den Boden 11 des Unterteiles 11 durch Stege 37 begrenzt. Wie die Fig. 7 der Zeichnung erkennen läßt, sind die Stege 37 geneigt zur Senkrechten und ihre freien Enden haben einen den Durchtritt des Schaftes der Befestigungsschraube 18 zulassenden gegenseitigen Abstand voneinander.

Im dargestellten Ausführungsbeispiel nach den Fig. 5 bis 7 wird die Mutter 19 in der Mutterntasche 36 erst dann festgehalten, wenn Ober- und Unterteil in ihre Sperrlage überführt sind, so wie dies die rechte Seite der Fig. 5 der Zeichnung veranschaulicht. In diesem Falle ist die zunächst offene Seite der Mutterntasche 36 durch Wandungsteile des Oberteiles der Einbaudose geschlossen.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. Insbesondere kann die Gestalt der Haltevorsprünge 21 und der damit zusammenwirkenden Haken 16 mannigfach geändert werden. Die Unterteilung der Einbaudose 10 kann ebenfalls variiert werden, indem beispielsweise der Unterteil kürzer bemessene Seitenwandungen 14 erhält. Als Verstelleinrichtungen für das Überführen von Oberteil 12 und Unterteil 11 in die jeweils gewünschte Lage können alle in der Technik bekannten Ausführungsformen benutzt werden. Obwohl es aus herstellungstechnischen Gründen zweckmäßig ist, die Sperrmittel 20 einstückig mit Seitenwandungen des Oberteiles 12 der Einbaudose 10 zu halten, kann es in Sonderfällen auch zur Verwendung von gesondert hergestellten Sperrmitteln kommen, die dann nachträglich mit den Seitenwandungen verbunden werden. Darüber hinaus ist es möglich, die erfindungsgemäße Einbaudose 10 auch an anderen an sich bekannten Montagewänden festzulegen. Dies gilt auch dann, wenn die Montagewand Bestandteil eines anderen Kabelkanals als des dargestellten ist. Bei der Ausführungsform der Erfindung nach den Fig. 5 bis 7 kann die Gestalt und die Anordnung der Rasten 34 und der damit zusammenwirkenden Gegenrasten abgeändert werden. Auch kann die Mutterntasche 36 eine andere als die dargestellte Ausführung erhalten. Um dabei die Mutter 19 in der Mutterntasche unabhängig von der gegenseitigen Lage von Ober- und Unterteil des Gehäuses lagezusichern, kann man eine Klemmverbindung benutzen, beispielsweise derart, daß man an einige der Begrenzungswandungen der Mutterntasche warzenartige Vorsprünge anformt. In diesem Falle ist es erforderlich, eine bestimmte Kraft aufzuwenden, um die Mutter 19 in die Mutterntasche 36 einzuschieben. Auf der anderen Seite wird durch die Klemmkraft ein ungewolltes Herausfallen der Mutter aus dieser Tasche verhindert und zwar auch dann, wenn die eine Seite der Mutterntasche offen ist.

### Bezugszeichenliste :

- 10: - Einbaudose
- 11: - Unterteil (von 10)
- 12: - Oberteil (von 10)
- 13: - Boden (von 11)
- 14: - Seitenwand (von 11)
- 15: - Spalt (zwischen 11 und 12)
- 16: - Haken (an 11)
- 17: - Schlitz (in 13)
- 18: - Befestigungsschraube (Verstelleinrichtung)
- 19: - Mutter
- 20: - Sperreinrichtung (an 12)
- 21: - Haltevorsprung
- 22: - Kabelkanal
- 23: - Boden (von 22) (Montagewandung)
- 24: - Vorsprung (an 25)
- 25: - Seitenwand (von 22)
- 26: - Anlagefläche (an 21)
- 27: - Rastelement (an 20)
- 28: - Aufnahmebohrung (für 18)
- 29: - Aufnahmeraum
- 30: - Rast
- 31: - Aufnahmeraum
- 32: - Rahmen
- 33: - untere Öffnung (von 28)
- 34: - Rast (an 11)
- 35: - Gegenrast (in 12)
- 36: - Mutterntasche
- 37: - Steg
- 38: - Verdickung
- 39: - Bohrung (in 38)
- a: - Befestigungsspur 60 mm
- b: - Befestigungsspur 67 mm

## Patentansprüche

1. Einbaudose (10) für elektrische Installationsgeräte zur verspannten Festlegung an einer Haltevorsprünge (21) aufweisenden Montagewand (23), die vorzugsweise Bestandteil von Kabelkanälen ist, mit mit den Haltevorsprüngen (21) zusammenwirkenden Haken (16), wobei die Einbaudose (10) einen Befestigungsteil (11) umfaßt, der durch von außen betätigbare Verstellmittel (18) verstellbar ist, wobei der Befestigungsteil (11) die Haken (16) aufweist, die Haltevorsprünge (21) der Montagewand (23) hintergreifen, und wobei in einer Sperrlage durch einem Oberteil (12) zugeordnete Sperrmittel (20) die Haken (16) in Bezug auf die Haltevorsprünge (20) sicherbar sind,
**dadurch gekennzeichnet,**
daß der Oberteil (12) der Einbaudose (10) bodenseitig von einem das Befestigungsteil (11) bildenden Unterteil geschlossen ist, derart, daß Oberteil (12) und Unterteil (11) aus einer Ruhelage in die Sperrlage relativ zueinander stellbar sind.

2. Einbaudose für elektrische Installationsgeräte nach Anspruch 1, dadurch gekennzeichnet, daß der Unterteil (11) der Einbaudose (10) einen an seiner Außenseite die Haken (16) aufweisenden Boden (13) und senkrecht dazu angeordnete, an den Innenwandungen des Oberteils (12) geführte Seitenwände (14) besitzt und daß in der Ruhelage zwischen dem Unterteil (11) und dem Oberteil (12) ein das Maß des gegenseitigen Verschiebens bestimmender Spalt (15) vorhanden ist (Fig. 2).

3. Einbaudose für elektrische Installationsgeräte nach Anspruch 1 und 2, dadurch gekennzeichnet, daß die Sperrmittel (20) durch Bereiche der Wandungen des Oberteils (12) der Einbaudose (10) gebildet sind.

4. Einbaudose für elektrische Installationsgeräte nach Anspruch 3, dadurch gekennzeichnet, daß die als Sperrmittel (20) dienenden Wandungen des Oberteils (12) der Einbaudose (10) Rastelemente (27) aufweisen.

5. Einbaudose für elektrische Installationsgeräte nach Anspruch 3 und 4, dadurch gekennzeichnet, daß die Rastelemente (27) den Wandungen angeformt sind.

6. Einbaudose für elektrische Installationsgeräte nach Anspruch 1, bei der als Verstellmittel Schrauben benutzbar sind, dadurch gekennzeichnet, daß die Aufnahmebohrung (28) für die Schraube (18) mehrere, wahlweise benutzbare Aufnahmeräume (29, 31) für den Schraubenschaft aufweist.

7. Einbaudose für elektrische Installationsgeräte nach Anspruch 6, dadurch gekennzeichnet, daß die Aufnahmeräume (29, 31) durch Rasten (30) voneinander getrennt sind.

8. Einbaudose für elektrische Installationsgeräte nach Anspruch 6 und 7, dadurch gekennzeichnet, daß die Aufnahmebohrung (28) einen unrunden, vorzugsweise ovalen Querschnitt aufweist, der sich in Richtung auf den Unterteil (11) verjüngt.

9. Einbaudose für elektrische Installationsgeräte nach einem oder mehreren der vorangehenden Ansprüche, gekennzeichnet durch die Verwendung eines Rahmens (32), der lösbar mit dem Oberteil (12) verbindbar ist.

10. Einbaudose für elektrische Installationsgeräte nach Anspruch 3, dadurch gekennzeichnet, daß die Breitenabmessungen des Sperrmittels (20) im wesentlichen dem gegenseitigen Abstand zweier Haltevorsprünge (21) der Montagewand (23) und die Höhe des Sperrmittels (20) etwa derjenigen eines Haltevorsprunges (21) entspricht.

11. Einbaudose für elektrische Installationsgeräte nach Anspruch 1, dadurch gekennzeichnet, daß der Oberteil (12) und der Unterteil (11) der Einbaudose (10) zusätzlich über Rasten (34) und Gegenrasten (35) miteinander verbunden sind, die eine räumlich begrenzte Verschiebung zwischen Oberteil (12) und Unterteil (11) zulassen.

12. Einbaudose für elektrische Installationsgeräte nach Anspruch 1 und 11, dadurch gekennzeichnet, daß die Rast (34) als nasenartiger Vorsprung des Unterteils (11) und die Gegenrast (35) als nutenartige Vertiefung der Innenwand des Oberteiles (12) ausgebildet ist.

13. Einbaudose für elektrische Installationsgeräte nach Anspruch 11 und 12, dadurch gekennzeichnet, daß der nasenartige Vorsprung (34) oberhalb einer Mutterntasche (36) für die mit der Befestigungsschraube (18) zusammenwirkenden Mutter (19) an der einen Seitenwand des Unterteils (11) angeordnet ist.

14. Einbaudose für elektrische Installationsgeräte nach Anspruch 13, dadurch gekennzeichnet, daß die Mutterntasche (36) in Richtung auf den Boden (13) des Unterteils (11) durch Stege (37) begrenzt ist.

15. Einbaudose für elektrische Installationsgeräte nach Anspruch 14, dadurch gekennzeichnet, daß die Stege (37) geneigt zur Senkrechten verlaufen und ihre freien Enden einen den Durchtritt des Schaftes der Befestigungsschraube (18) zulassenden gegenseitigen Abstand voneinander haben.

16. Einbaudose für elektrische Installationsgeräte nach einem oder mehreren der vorangehenden Ansprüche mit einer hohlkegelförmigen Aufnahmebohrung für die Befestigungsschraube, dadurch gekennzeichnet, daß die untere Öffnung (33) der Aufnahmebohrung (28) für die Befestigungsschraube (18) einen Durchmesser aufweist, der kleiner als der der Befestigungsschraube (18) ist.

17. Einbaudose für elektrische Installationsgeräte nach Anspruch 16, dadurch gekennzeichnet, daß die untere Öffnung (33) der Aufnahmebohrung (28) einen vorzugsweise umlaufenden, lippenartigen, mit dem Gewinde der Befestigungsschraube (18) zusammenwirkenden Begrenzungsrand aufweist.

18. Einbaudose für elektrische Installationsgeräte nach Anspruch 13, dadurch gekennzeichnet, daß wenigstens einige der Seitenwandungen der Mutterntasche (36) die Mutter (19) durch Klemmung festlegende Vorsprünge aufweisen.

## Claims

1. Recessed receptacle (10) for electrical installation hardware clamping onto mounting panels (23), preferably components of cable ducts, equipped with protruding mounts (21), where said recessed receptacle (10) is equipped with lugs (16) engaging said protruding mounts (21) and incorporates a mounting base (11) whose positioning may be adjusted by external means (18), and where said mounting base (11) incorporates said lugs (16) engaging said protruding mounts (21) of said mounting panels (23), and where, when clamped in position by means of a clamping fixture (20) attached to the top section (12) of said recessed receptacle (10), said lugs (16) may be secured to said protruding mounts (21).

2. Recessed receptacle for electrical installation hardware per Claim 1, distinguished by the fact that the bottom (13) of said base (11) of said recessed receptacle (10) is equipped with external lugs (16) and with side walls (14) oriented perpendicular to said bottom (13) and mating to the inner walls of its top section (12), and exhibiting in its disengaged position a clearance (15) between said base (11) and said top section (12) that limits the extent of movement (Fig. 2) of said sections relative to one another.

3. Recessed receptacle for electrical installation hardware per Claims 1 and 2, distinguished by the fact that its clamping fixture (20) is formed from segments of the walls of said top section (12) of said recessed receptacle (10).

4. Recessed receptacle for electrical installation hardware per Claim 3, distinguished by the fact that the walls of said top section (12) of said recessed receptacle (12) serving as clamping fixture (20) are equipped with detenting elements (27).

5. Recessed receptacle for electrical installation hardware per Claims 3 and 4, distinguished by its having detenting elements (27) molded into or onto to its walls.

6. Recessed receptacle for electrical installation hardware per Claim 1 employing screws as means of adjusting its positioning, distinguished by the fact that the through holes (28) for accommodating said screws (18) have several optionally employable passages (29, 31) accepting the shafts of said screws (18).

7. Recessed receptacle for electrical installation hardware per Claim 6, distinguished by the fact that said passages (29, 31) are mutually segregated by detents (30).

8. Recessed receptacle for electrical installation hardware per Claims 6 and 7, distinguished by the fact that said through holes (28) have non-circular, preferably oval, cross-sections tapering toward said base (11).

9. Recessed receptacle for electrical installation hardware per one or more of the above claims, distinguished by the employment of a frame (32) that may be attached to, and removed from, its top section (12).

10. Recessed receptacle for electrical installation hardware per Claim 3, distinguished by the fact that the lateral dimension of said clamping fixture (20) is roughly equal to the spacing between two protruding mounts (21) on said mounting panel (23), and that the height of said clamping fixture (20) is roughly equal to the height of said protruding mounts (21).

11. Recessed receptacle for electrical installation hardware per Claim 1, distinguished by the fact that said top section (12) and said base (11) of said recessed receptacle (10) are additionally held together by detents (34) and mating elements (35) allowing limited amounts of relative movement of said top section (12) and said base (11).

12. Recessed receptacle for electrical installation hardware per Claims 1 and 11, distinguished by the fact that said detent (34) is present in the form of a protrusion on its base (11) and said mating element (35) is present in the form of a groove-like depression in the inner wall of its top section (12).

13. Recessed receptacle for electrical installation hardware per Claims 11 and 12, distinguished by the fact that said protrusion (34) is located on a side wall of said base (11), at a point above a captive-nut retainer (36) holding a nut (19) mating to said mounting screw (18).

14. Recessed receptacle for electrical installation hardware per Claim 13, distinguished by the fact that the clearance between said captive-nut retainer (36) and the bottom (13) of said base (11) is restricted by spiders (37).

15. Recessed receptacle for electrical installation hardware per Claim 14, distinguished by the fact that the legs of said spider (37) are angled toward the vertical, and that the clearances between said tips of said legs of said spider (37) are adequate to allow free passage of the shaft of said mounting screw (18).

16. Recessed receptacle for electrical installation hardware per one or more of the above claims having a tapered through hole for accommodating a mounting screw, distinguished by the fact that the diameter of the lower exit (33) of said through hole (28) for accommodating said mounting screw (18) is less than that of said mounting screw (18).

17. Recessed receptacle for electrical installation hardware per Claim 16, distinguished by the fact that said lower exit (33) of said through hole (28) exhibits a lip-shaped, preferably fully circumferential, retaining rim acting on the thread of said mounting screw (18).

18. Recessed receptacle for electrical installation hardware per Claim 13, distinguished by the fact that at least some of the side walls of said captive-nut retainer (36) exhibit protrusions retaining said nut (19) through a clamping action.

## Revendications

1. Boîte encastrable (10) pour appareils d'installation électrique, immobilisée par serrage contre un panneau de montage (23) présentant des saillies de retenue, ledit panneau (23) faisant de préférence partie intégrante de canalisations à câbles et des crochets (16) interagissant avec les saillies (21), la boîte encastrable (10) comprenant un élément de fixation (11) déplaçable par des moyens de déplacement (18) actionnables de l'extérieur, l'élément de fixation (11) présentant les crochets (16) qui s'engagent au dos des saillies (21) du panneau (23), les crochets (16) étant blocables dans une position de verrouillage par rapport aux saillies de retenue (20) par des moyens de verrouillage subordonnés à une pièce supérieure (12),
**caractérisée en ce que**
ladite pièce supérieure (12) de la boîte encastrable (10) est fermée par une pièce inférieure formant la pièce de fixation (11), de telle sorte que la pièce supérieure (12) et la pièce inférieure (11) sont déplaçables l'une par rapport à l'autre, d'une position de repos à une position de verrouillage.

2. Boîte encastrable pour appareils d'installation électrique selon revendication 1, caractérisée en ce que la pièce inférieure (11) de la boîte encastrable (10) possède un fond (13) dont la face extérieure présente les crochets (16) et, agencées à la perpendiculaire du fond, des faces latérales (14) guidées contre les parois intérieures de la pièce supérieure (12), et en ce qu'en position de repos existe un jeu (15) déterminant l'ampleur du déplacement réciproque entre la pièce inférieure (11) et la pièce supérieure (12) (Fig. 2).

3. Boîte encastrable pour appareils d'installation électrique selon les revendications 1 et 2, caractérisée en ce que les moyens de verrouillage (20) sont formés par certaines zones des parois de la pièce supérieure (12) de la boîte encastrable (10).

4. Boîte encastrable pour appareils d'installation électrique selon la revendication 3, caractérisée en ce que les parois de la pièce supérieure (12) de la boîte (10) servant de moyens de verrouillage (20) présentent des éléments encochants (27).

5. Boîte encastrable pour appareils d'installation électrique selon les revendications 3 et 4, caractérisée en ce que les éléments encochants (27) épousent la forme des parois.

6. Boîte encastrable pour appareils d'installation électrique selon revendication 1, boîte sur laquelle des vis sont utilisables comme moyen de déplacement, caractérisée en ce que le perçage (28) logeant la vis (18) présente plusieurs compartiments-logements (29, 31) utilisables au choix pour recevoir la tige de la vis.

7. Boîte encastrable pour appareils d'installation électrique selon revendication 6, caractérisée en ce que les compartiments-logements (29, 31) sont séparés les uns des autres par des encoches (30).

8. Boîte encastrable pour appareils d'installation électrique selon les revendications 6 et 7, caractérisée en ce que le perçage-logement (28) est de section non ronde, ovale de préférence, allant en se rétrécissant en direction de la pièce inférieure (11).

9. Boîte encastrable pour appareils d'installation électrique selon l'une ou plusieurs des revendications précédentes, caractérisée par l'utilisation d'un cadre (32) reliable amovible à la pièce supérieure (12).

10. Boîte encastrable pour appareils d'installation électrique selon revendication 3, caractérisée en ce que les largeurs du moyen de verrouillage (20) correspondent pour l'essentiel à la distance séparant deux saillies de retenue (21) du panneau de montage (23) et que la hauteur dudit moyen (20) correspond approximativement à celle d'une saillie de retenue (21).

11. Boîte encastrable pour appareils d'installation électrique selon revendication 1, caractérisée en ce que la pièce supérieure (12) et la pièce inférieure (11) de la boîte encastrable (10) sont en outre reliées l'une à l'autre par des encoches (34) et encoches antagonistes (35) qui permettent le déplacement réciproque, limité dans l'espace, de la pièce supérieure (12) et de la pièce inférieure (11).

12. Boîte encastrable pour appareils d'installation électrique selon les revendications 1 et 11, caractérisée en ce que l'encoche (34) est une saillie de la pièce inférieure (11) en forme de nez et que l'encoche antagoniste (35) est une cavité en forme de rainure ménagée dans la paroi intérieure de la pièce supérieure (12).

13. Boîte encastrable pour appareils d'installation électrique selon les revendications 11 et 12, caractérisée en ce que la saillie (34) en forme de nez est située contre la paroi latérale de la pièce inférieure (11) au-dessus d'une poche (36) recevant les écrous (19) interagissant avec la vis de fixation (18).

14. Boîte encastrable pour appareils d'installation électrique selon la revendication 13, caractérisée en ce que la poche à écrou (36) est limitée en direction du fond (13) de la pièce inférieure (11) par des nervures (37).

15. Boîte encastrable pour appareils d'installation électrique selon revendication 14, caractérisée en ce que les nervures (37) ont un tracé incliné par rapport à la verticale et que leurs extrémités libres sont réciproquement à une distance autorisant le passage de la tige de la vis de fixation (18).

16. Boîte encastrable pour appareils d'installation électrique selon l'une ou plusieurs des revendications précédentes avec un perçage-logement en forme de cône creux recevant la vis de fixation, caractérisée en ce que l'orifice inférieur (33) du perçage-logement (28) recevant la vis de fixation (18) est d'un diamètre inférieur à celui de la vis (18).

17. Boîte encastrable pour appareils d'installation électrique selon revendication 16, caractérisée en ce que l'orifice inférieur (33) du perçage-logement (28) présente une bordure limitatrice circonférentielle, de préférence en forme de lèvre, interagissant avec le filet de la vis de fixation (18).

18. Boîte encastrable pour appareils d'installation électrique selon revendication 13, caractérisée en ce qu'au moins quelques unes des parois latérales de la poche (36) à écrous présentent des saillies immobilisant l'écrou (19) par blocage.
